# FASCICULE DE BREVET EUROPEEN

(11) **EP 0 368 722 B1**
(45) Date de publication et mention de la délivrance du brevet: **29.12.1993**
(21) Numéro de dépôt: 89402998.2
(22) Date de dépôt: 31.10.1989
(51) Int. Cl.: C01B 33/141, D21H 19/36

(54) **Suspension aqueuse stable de silice de précipitation**
Stabile, wässrige Fällungskieselsäuresuspension
Stable aqueous suspension of precipitated silica

(30) Priorité: 08.11.1988 FR 8814565
(43) Date de publication de la demande: 16.05.1990
(73) Titulaire: RHONE-POULENC CHIMIE, 92408 Courbevoie Cédex (FR)
(72) Inventeur: Dromard, Adrien, F-69006 Lyon (FR); Richard, Claude, F-69001 Lyon (FR)
(74) Mandataire: Dutruc-Rosset, Marie-Claude

(56) Documents cités:
- EP-A- 0 194 116
- FR-A- 2 414 387

## Description

La présente invention concerne la préparation de suspensions aqueuses stables de silice de précipitation ainsi que leur utilisation dans l'industrie papetière.

Les suspensions ou bouillies aqueuses de silices sont utilisées dans plusieurs domaines notamment dans l'industrie papetière pour le couchage du papier.

Or, ces suspensions ont tendance à sédimenter ou à gélifier ce qui les rend difficilement transportables ou stockables. On observe en effet très souvent à l'issue du transport ou après une plus ou moins longue période de stockage la formation d'un gel ou le dépôt d'une couche dure de pigment surmontée d'une bouillie plus fluide mais pauvre en matière sèche. De plus il est souvent impossible de remettre la silice en suspension ou d'obtenir une bouillie présentant une viscosité suffisamment faible pour être pompable et donc utilisable industriellement. Il y a donc là un problème certain et qui se pose d'autant plus que l'on cherche à obtenir des suspensions à teneur en matière sèche élevée.

On connait d'après les demandes de brevet français 2414387 et européen 194116 des procédés de stabilisation de bouillies de silice utilisant de la gomme xanthane ou un ammonium quaternaire. Toutefois, ces demandes concernent essentiellement des bouillies de gel de silice, les suspensions à base de silice précipitées stabilisées par ces procédés ne dépassent pas une concentration de l'ordre de 10 %.

L'objet principal de l'invention est donc une suspension de silice qui soit stable, non gélifiante, pompable et dispersible après plusieurs jours de stockage, tout en étant concentrée.

Dans ce but, la suspension aqueuse stable de silice selon l'invention est caractérisée en ce qu'elle comprend une silice de précipitation, une biogomme, un tensio-actif cationique choisi dans le groupe des composés d'ammonium quaternaire et des composés sulfonium ou phosphonium.

On a pu constater qu'après une longue période de stockage allant de plusieurs jours à plusieurs mois, les suspensions de l'invention ne sédimentaient pas ou peu et en tout cas conservaient une viscosité convenable.

D'autres caractéristiques et avantages de l'invention seront mieux compris à la lecture de la description et des exemples concrets mais non limitatifs qui vont suivre.

La suspension selon l'invention est à base essentiellement d'une silice de précipitation. On entend par là toute silice obtenue par réaction d'un silicate avec un acide. Le mode de préparation de la silice peut être quelconque (addition d'acide sur un pied de cuve de silicate, addition simultanée totale ou partielle d'acide et de silicate sur un pied de cuve d'eau ou de solution de silicate, etc...) et il sera choisi en fonction du type de silice que l'on souhaite obtenir et donc de l'application que l'on désire faire de la suspension. On distingue les silices de précipitation, qui constituent les suspensions de l'invention, des gels selon les critères habituels et connus à savoir notamment que les silices de précipitation présentent une distribution des pores très dispersée par suite d'une structure discontinue, les gels ayant au contraire une structure tridimensionnelle continue. Les silices de précipitation sont précipités généralement à un pH autour du pH neutre ou à pH basique, les gels étant eux obtenus à un pH habituellement acide ou très acide.

A titre d'exemple on peut utiliser dans le cadre de la présente invention des silices ayant, une fois séchées, une surface BET selon la norme NFX 11-622 (3.3) généralement d'au plus à 400 m2/g et de préférence comprise entre 20 et 400 m2/g et plus particulièrement entre 50 et 250 m²/g. Les silices peuvent aussi présenter des prises d'huile, selon la norme NFT 30-022 (mars 53) en mettant en oeuvre le dioctyl phtalate, pouvant varier entre 50 et 400 cm3/100 g.

La suspension de silice de l'invention peut être obtenue par mise en suspension dans l'eau d'une silice préalablement préparée et éventuellement séchée.

Il est aussi possible selon une variante particulière de l'invention de partir d'une suspension de silice constituée du gâteau de filtration issu de la réaction de précipitation.

En d'autres termes, on réalise la précipitation de la silice, on filtre le milieu réactionnel et on obtient un gâteau de filtration qui est lavé si nécessaire. Ce gâteau est ensuite délité et il forme ainsi une suspension.

Ces suspensions peuvent être stabilisées selon l'invention par le système qui va être décrit ci-dessous.

Ce système est à base tout d'abord d'une biogomme. Les biogommes sont des polysaccharides de poids moléculaire élevé, généralement supérieur à un million, obtenus par fermentation d'un hydrate de carbone sous l'action d'un microorganisme.

Comme biogommes pouvant être utilisées dans la suspension faisant l'objet de la présente invention, on peut citer celles obtenues par fermentation sous l'action de bactéries ou de champignons appartenant au genre Xanthomonas telles que Xanthomonas begoniae, Xanthomonas campestris, Xanthomonas carotae, Xanthomonas hederae, Xanthomonas incanae, Xanthomonas malvacearum, Xanthomonas papavericola, Xanthomonas phaseoli, Xanthomonas pisi, Xanthomonas vasculorum, Xanthomonas vesicatoria, Xanthomonas vitians, Xanthomonas pelargonii ; au genre Arthrobacter et plus particulièrement les espèces Arthrobacter stabilis, Arthrobacter viscosus ; au genre Erwinia ; au genre Azotobacter et plus particulièrement l'espèce Azobacter indicus ; au genre Agrobacter et plus particulièrement les espèces Agrobacterium radiobacter, Agrobacterium rhizogènes, Agrobacter tumefaciens ; au genre Alcaligènes et plus particulièrement l'espèce Alcaligènes faecalis ; au genre Rhizobium ; au genre Sclerotium et plus particulièrement les espèces Sclerotium rolfsii et Sclerotium glucanicum ; au genre Corticium ; au genre Sclerotinia ; au genre Stromatinia.

Comme biogomme pouvant être obtenue par fermentation par les microorganismes décrits ci-dessus, on utilise tout particulièrement la gomme obtenue par fermentation des bactéries du genre Xanthomonas.

Bien entendu, on ne sortirait pas du cadre de la présente invention en utilisant comme stabilisant un mélange de biogommes.

Le système stabilisant de l'invention comprend en outre un tensio-actif cationique choisi dans le groupe des composés d'ammonium quaternaire et des composés phosphonium et sulfonium.

Les composés d'ammonium quaternaire pourront notamment être choisis dans ceux de formules (1) : 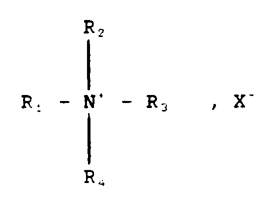
dans laquelle X est un anion et R₁, R₂, R₃, R₄ peuvent être des radicaux alkyle, alcenyle, alkyle-oxy, alkyle-phényle, aryle, de préférence au moins un des radicaux précités ayant un nombre d'atomes de carbone égal ou supérieur à 6.

On peut utiliser aussi les composés d'ammonium quaternaire hétérocyclique, c'est-à-dire ceux dans lesquels l'atome d'azote fait partie d'un hétérocycle, cet hétérocycle pouvant être saturé ou non. A titre d'exemple, on peut citer ceux de formule : 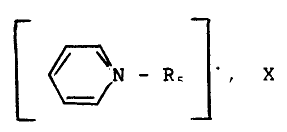
dans laquelle X est un anion, R₅ un radical alkyle avec de préférence un nombre d'atomes de carbone supérieur à 7, l'hétérocycle pouvant être substitué.

On utilise plus particulièrement comme composés d'ammonium quaternaire les halogénures (notamment chlorure ou bromure), sulfate ou acétate d'ammonium.

On peut utiliser tout particulièrement les composés de formule :

R₆ N(CH₃)₃⁺ X⁻

ou X = Cl ou Br et R₆ est un radical alkyle ayant au moins 8 atomes de carbone tels que par exemple le bromure de cetyl-trimethyl ammonium (CTAB), le bromure de dodecyl-trimethyl ammonium, le chlorure d'hexadecyl-trimethyl ammonium.

Parmi les composés hétérocycliques, on peut mentionner le chlorure ou bromure de cetyl pyridinium.

Par ailleurs, il est possible dans le cadre de la présente invention d'utiliser un système stabilisant conprenant en outre de l'aluminium ou un composé de l'aluminium. Selon un mode de réalisation particulier de l'invention, l'aluminium est utilisé sous forme d'aluminate de sodium ou de sulfate d'aluminium. Toutefois, on peut également, sans sortir du cadre de la présente invention, faire appel à tout composé de l'aluminium remplissant la même fonction sans altérer les propriétés de la silice tel que par exemple les chlorure, acétate, phosphate, nitrate d'aluminum, les aluminates alcalins et alcalino-terreux.

L'aluminium ou le composé d'aluminium peut être introduit lors de la préparation même de la silice c'est-à-dire pendant la précipitation ou postérieurement. Toutefois, il est préférable de l'apporter soit sur le gâteau de filtration précité soit au moment du délitage de celui-ci.

La présence d'aluminium ou d'un composé d'aluminium permet d'obtenir des suspensions de viscosité plus faible.

Enfin, il est avantageux d'utiliser en combinaison avec les éléments précités du système stabilisant un agent antibactérien du type formaldéhyde, glutaraldéhyde, benzoate de sodium azoture de sodium par exemple.

La quantité de biogomme est généralement comprise entre 0,05 et 1 % et plus particulièrement entre 0,1 et 0,5 % en poids par rapport à la silice anhydre. Pour le tension-actif cationique cette quantité varie en principe entre 0,05 et 0,5 %.

En cas d'utilisation d'aluminum ou d'un composé d'aluminium la teneur en aluminium exprimée en aluminium rapportée à la quantité de silice anhydre est généralement comprise entre 500 à 10000 p.p.m. et plus particulièrement de 1000 à 6000 p.p.m.

Par ailleurs, selon un autre mode de réalisation particulier de l'invention, on fait subir à la silice de la suspension un broyage. On broie la silice pour obtenir essentiellement un produit plus fin ayant une répartition granulométrique plus resserrée.

Le broyage est conduit de manière à obtenir par exemple une silice présentant un diamètre médian de particules compris entre 0,5 et 15 µm, plus particulièrement entre 1 et 5 µm (détermination au compteur Coulter).

On a constaté que le broyage permet d'augmenter la stabilité dans le temps de la bouillie.

Le mode de préparation de la suspension n'est pas critique. Généralement, on mélange dans un bac la silice en suspension au tensio-actif cationique et éventuellement à l'aluminium ou au composé de celui-ci. Puis dans un deuxième temps on ajoute la biogomme. Enfin le cas échéant on passe le mélange ainsi obtenu dans un broyeur.

Le pH final de la suspension ne semble pas critique. En pratique, il est compris entre 5,5 et 8,5.

Le taux de matière sèche est généralement d'au moins 15 % de préférence supérieur à 25 %. Selon l'invention, on peut obtenir en pratique des suspensions à au moins 35 % de silice.

Les suspensions stables obtenues de la manière qui vient d'être décrite peuvent être avantageusement utilisées dans les industries du papier et du carton comme par exemple le couchage pour la préparation de papiers spéciaux, le jet d'encre, le transfert thermique et la préparation du papier de bas grammage.

Bien entendu, les suspensions de l'invention conviennent pour toutes les applications connues de ce type de produits comme par exemple en tant que compositions de polissage, adjuvants pour béton et matériaux de constructions, adjuvants pour peintures, encres, colles, vernis, etc...

Des exemples concrets vont maintenant être donnés.

### EXEMPLE 1

On part d'une silice de précipitation pulvérulente présentant une surface BET de 250 m²/g, une prise d'huile DOP de 130 cm³/100g et une perte au feu de 11 % à 900° C.

90 g de cette silice sont dispersés dans 142 g d'eau. On ajoute à la dispersion 5 g de CTAB à 2,5 % puis 10 g de RHODOPOL 50 MC à 2 %. La suspension présente un taux de matière sèche de 34 % et un pH de 7,2. Le diamètre moyen des particules en suspension est de 20 µm.

Au bout de 6 mois de stockage, le volume sédimentaire (volume de solide/volume total) est nul. La viscosité mesurée au viscosimètre RHEOMAT 115 à 1 000 s⁻¹ est de 130 m.Pa.s.

### EXEMPLE 2

On utilise une silice ayant les mêmes caractéristiques que celles de l'exemple 1 mais sous forme d'un gateau de filtration, issu directement de la réaction de précipitation. D'autre part, lors de la préparation de cette silice, de l'aluminium a été introduit sous forme d'aluminate de sodium durant la précipitation dans une quantité de 5 000 p.p.m. exprimée en aluminium par rapport à la silice anhydre.

A 6 000 g de ce gateau lavé, à 37 % de SiO₂, on ajoute dans un déliteur 117g de CTAB à 2,5 %. Après 15 minutes d'agitation, on ajoute enfin 234 g de RHODOPOL 50 MC à 2 %.

Le mélange repris par une pompe est broyé au moyen d'un appareil DYNO de façon à obtenir la granulométrie désirée.

On obtient ainsi une bouillie de pH 6,8 comprenant 36 % de silice sous forme de particules de diamètre médian déterminé au compteur Coulter de 2,9 µm.

Après 60 jours, le volume sédimentaire est nul. La viscosité est de 480 m.Pa.s. mesurée au viscosimètre RHEOMAT 115 à 1 000 s⁻¹. La suspension est fluide et pompable.

### EXEMPLE 3 COMPARATIF

On part d'un gateau de filtration d'une silice, qui une fois séchée présenterait une surface BET de 100 m²/g, une prise d'huile DOP de 120 ml/100 g, d'une perte au feu de 10 % à 900° C.

On délite 227 g (100 g de SiO₂) de ce gateau auquel on a additionné 48 g d'eau dans un ULTRA-TURAX, puis on y ajoute 10 g de RHODOPOL 50 MC à 2 %. On obtient une bouillie de pH 7,5 à teneur en silice de 35 %.

Au bout de 8 jours, on observe la formation d'un sédiment dur. Le volume sédimentaire est de 80 %.

### EXEMPLE 4 COMPARATIF

On part du même gateau de silice que celui de l'exemple 3.

On délite 253 g du gateau (100 g de SiO₂) dans un ULTRA-TURAX et on y ajoute 10 g d'eau et 8 g d'une solution de CTAB à 2,5 %. L'agitation est maintenue jusqu'à homogenéisation totale. On obtient une suspension de pH 6,8 à teneur en silice de 37 %.

Après un mois, le mélange présente une viscosité très élevée de 2 200 m.Pa.s mesurée au viscosimètre RHEOMAT 115 à 1 000 s⁻¹, qui le rend non pompable.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Suspension aqueuse stable de silice caractérisée en ce qu'elle comprend :
- une silice de précipitation,
- une biogomme,
- un tensio-actif cationique choisi dans le groupe des composés d'ammonium quaternaire et des composés de sulfonium ou de phosphonium.

2. Suspension selon la revendication 1, caractérisée en ce que la silice est constituée par un gâteau de filtration issu de la réaction de précipitation et délité.

3. Suspension selon la revendication 1 ou 2, caractérisée en ce qu'elle comprend une biogomme qui a été obtenue par fermentation d'hydrate de carbone par des bactéries ou des champignons appartenant aux genres Xanthomonas, Arthrobacter, Azotobacter, Agrobacter, Alcaligènes, Erwinia, Rhizobium, Corticium, Sclerotinia, Stromatinia ou Sclerotium.

4. Suspension selon la revendication 3 caractérisée en ce qu'elle comprend une gomme xanthane.

5. Suspension selon l'une des revendications précédentes, caractérisée en ce qu'elle comprend comme composé d'ammonium quaternaire un halogénure, un sulfate ou un acétate d'ammonium.

6. Suspension selon l'une des revendications précédentes, caractérisée en ce qu'elle comprend un composé d'ammonium quaternaire hétérocyclique.

7. Suspension selon l'une des revendications précédentes, caractérisée en ce qu'elle comprend comme composé d'ammonium quaternaire un composé de formule RN(CH₃)₃⁺, X⁻ dans laquelle X est le chlore ou le brome et R un radical alkyl ayant au moins 8 atomes de carbone.

8. Suspension selon l'une des revendications précédentes, caractérisée en ce qu'elle comprend en outre de l'aluminium ou un composé de l'aluminium.

9. Utilisation des suspensions selon l'une des revendications précédentes dans la fabrication des papiers et cartons.

## Claims

1. A stable aqueous suspension of silica characterised in that it comprises:
- a precipitation silica,
- a biogum, and
- a cationic surface active agent selected from the group of compounds of quaternary ammonium and compounds of sulphoniun or phosphonium.

2. A suspension according to claim 1 characterised in that the silica is formed by a filter cake resulting from the precipitation reaction and slaked.

3. A suspension according to claim 1 or claim 2 characterised in that it comprises a biogum which was obtained by the fermentation of carbohydrate by bacteria or fungi belonging to the genera Xanthomonas, Arthrobacter, Azotobacter, Agrobacter, Alcaligenes, Erwinia, Rhizobium Corticium, Sclerotinia, Stromatinia or Sclerotium.

4. A suspension according to claim 3 characterised in that it comprises a xanthane gum.

5. A suspension according to one of the preceding claims characterised in that it comprises an ammonium acetate, sulphate or halide as the quaternary ammonium compound.

6. A suspension according to one of the preceding claims characterised in that it comprises a heterocyclic quaternary ammonium compound.

7. A suspension according to one of the preceding claims characterised in that as the quaternary ammonium compound it comprises a compound of the formula RN(CH₃)₃⁺, X⁻ in which X is chlorine or bromine and R is an alkyl radical having at least 8 carbon atoms.

8. A suspension according to one of the preceding claims characterised in that it further comprises aluminium or a compound of aluminium.

9. Use of the suspensions according to one of the preceding claims in the production of papers or cardboards.

## Patentansprüche

1. Stabile wäßrige Kieselsäuresuspension, dadurch gekennzeichnet, daß sie umfaßt:
- eine Fällungskieselsäure,
- einen Biogummi,
- ein kationisches Tensid, ausgewählt aus der Gruppe der quaternären Ammoniumverbindungen und der Sulfonium- oder Phosphoniumverbindungen.

2. Suspension nach Anspruch 1, dadurch gekennzeichnet, daß die Kieselsäure aus einem bei der Fällungsreaktion erhaltenen und zerteilen Filterkuchen besteht.

3. Suspension nach Anspruch 1 oder 2, dadurch gekennzeichnet, daß sie einen Biogummi enthält, der durch Fermentation von Kohlenhydraten mit Bakterien oder Pilzen der Gattungen Xanthomonas, Arthrobacter, Azotobacter, Agrobacter, Alcaligenes, Erwinia, Rhizobium, Corticium, Sclerotinia, Stromatinia oder Sclerotium erhalten worden ist.

4. Suspension nach Anspruch 3, dadurch gekennzeichnet, daß sie einen Xanthangummi enthält.

5. Suspension nach einem der vorangehenden Ansprüche, dadurch gekennzeichnet, daß sie als quaternäre Ammoniumverbindung ein Ammoniumhalogenid, -sulfat oder -acetat enthält.

6. Suspension nach einem der vorangehenden Ansprüche, dadurch gekennzeichnet, daß sie eine heterocyclische quaternäre Ammoniumverbindung enthält.

7. Suspension nach einem der vorangehenden Ansprüche, dadurch gekennzeichnet, daß sie als quaternäre Ammoniumverbindung eine Verbindung der Formel RN(CH₃)₃^{.}X⁻ enthält, in der X Chlor oder Brom bedeutet und R für eine Alkylgruppe mit mindestens 8 Kohlenstoffatomen steht.

8. Suspension nach einem der vorangehenden Ansprüche, dadurch gekennzeichnet, daß sie zusätzlich Aluminium oder eine Aluminiumverbindung enthält.

9. Verwendung der Suspensionen nach einem der vorangehenden Ansprüche bei der Herstellung von Papier und Kartons.
